# EUROPÄISCHE PATENTSCHRIFT

(11) **EP 0 297 315 B1**
(45) Veröffentlichungstag und Bekanntmachung des Hinweises auf die Patenterteilung: **08.12.1993**
(21) Anmeldenummer: 88109071.6
(22) Anmeldetag: 07.06.1988
(51) Int. Cl.: B22F 7/00, C22C 1/10

(54) **Verfahren zur Herstellung eines Verbundes aus einer Cermet-Schicht und einer porösen Metallschicht auf einer oder beiden Seiten der Cermet-Schicht als Diaphragma mit Elektrode(n)**
Process for preparing a composite from a cermet layer and a porous metal layer on one or both sides of the cermet layer for a diaphragm with an electrode
Procédé pour la préparation d'un article fait d'une couche de cermet et d'une couche de métal poreux sur une ou deux faces de la couche de cermet comme diaphragme avec électrodes

(30) Priorität: 01.07.1987 DE 3721753
(43) Veröffentlichungstag der Anmeldung: 04.01.1989
(73) Patentinhaber: Deutsche Aerospace AG, 81663 München (DE)
(72) Erfinder: Hofmann, Hans, Dr., D-6052 Mühlheim (DE); Wendt, Hartmut, Prof. Dr., D-6110 Dieburg (DE)

(56) Entgegenhaltungen:
- EP-A- 0 098 517
- DE-A- 1 806 803
- GB-A- 2 018 833

## Beschreibung

Die Erfindung bezieht sich auf ein Verfahren zur Herstellung eines Verbundes aus einer Cermetschicht und einer porösen Metallschicht auf einer oder beiden Seiten der Cermetschicht als Diaphragma mit Elektrode(n) für die Wasserelektrolyse, Chloralkalielektrolyse oder Brennstoffzellen, bei dem ein grüner Rohling der Cermetschicht gefertigt wird, auf den ein- oder beidseitig eine Schicht aus einem reduzierbaren Metalloxid aufgebracht wird, die durch reduktives Sintern in die poröse Metallschicht übergeführt wird.

Ein derartiges Verfahren ist aus der DE-OS 32 24 555 bekannt. Dabei wird der grüne Cermet-Rohling aus einem Gemisch aus der keramischen Komponente und einem Metallpulver, wie Nickelpulver, hergestellt. Der bekannte Cermet-Metall-Verbund weist jedoch eine unzureichende mechanische Stabilität auf. Aus der DE-OS 32 24 556 ist es bekannt, die mechanische Stabilität der Cermet-Zwischenschicht durch Einbau eines Metallnetzes zu verbessern. Trotz des relativ aufwendigen verbundenen Einbaus des Metallnetzes läßt jedoch auch diese Zwischenschicht hinsichtlich Stabilität und Flexibilität noch zu wünschen übrig. Ferner ist der Nachteil einer metallisch leitenden (Kurzschluß-)Verbindung der beiden Elektroden und dadurch die Unbrauchbarkeit der gesamten Vorrichtung nicht auszuschließen.

Aufgabe der Erfindung ist es daher, einen Verbund aus einer Cermetschicht und einer porösen Metallschicht auf einer oder beiden Seiten der Cermetschicht als Diaphragma mit Elektrode(n) für die Wasserelektrolyse, Chloralkalielektrolyse oder Brennstoffzellen bereitzustellen, welcher ohne aufwendigen Einbau eines Metallnetzes eine hohe mechanische Stabilität und Flexibilität besitzt und gleichzeitig die Gefahr eines elektrischen Kurzschlusses der Zelle ausschließt.

Völlig überasschend hat sich herausgestellt, daß auf den Einbau eines Metallnetzes dann völlig verzichtet werden kann, wenn sowohl für die Elektrodenschicht wie für die Metallkomponente der Cermetschicht ein Metalloxid eingesetzt wird. Dies dürfte darauf zurückzuführen sein, daß beim reduktiven Sintern des Metalloxids Metall im status nascendi gebildet wird, welches zu den Korngrenzen diffundiert und damit zu einer innigen, festen Verbindung der Teilchen des Sinterkörpers führt. Insbesondere wird dadurch auch eine außergewöhnlich gute Haftung zwischen Cermetschicht und den Elektrodenschichten erzielt. Die Cermetschicht ist also erfindungsgemäß ungestützt, d.h. sie enthält kein Metallnetz, sondern besteht nur aus dem Cermet.

Der Anteil der reduzierbaren Metalloxide in dem grünen Cermet-Rohling wird vorzugsweise so gewählt, daß das entstehende Metall 5 bis 40 % des Gewichts des Cermet ausmacht.

Als reduzierbare Metalloxide für die Metall-Komponente des Cermets sowie für die poröse Metallschicht werden bevorzugt Oxide von Metallen der ersten, zweiten oder achten Nebengruppe des Periodensystems verwendet, insbesondere Eisen, Kobalt und Nickel. Diese Metalloxide oder Metalloxid-Mischungen führen nach dem reduktiven Sintern zu definierten Legierungen, welche bereits nach dem Prinzip der katalytisch aktiven Matrix ausgewählt werden.

So wird vorzugsweise die Anode aus einem Gemisch aus Nickeloxid und Kobaltoxid mit einem Kobaltoxid-Anteil von 20 bis 90, vorzugsweise 50 bis 80 Gew.% hergestellt. Ganz besonders bevorzugt wird dabei eine Legierung aus 33,34 Atom-% Nickel und 66,66 Atom-% Kobalt, die in ihrer Zusammensetzung dem Spinell NiCo₂O₄ entspricht.

Die keramische Komponente der Cermetschicht besteht vorzugsweise aus calcinierten, gemahlenen Oxiden der Erdalkali-, Alkali- oder Seltenerdmetalle sowie amphoteren Oxiden der Metalle der dritten bis sechsten Nebengruppe des Periodensystems. Besonders bevorzugt sind Oxide der Erdalkalimetalle und der vierten und fünften Nebengruppe des Periodensystems, z.B. Mischoxide definierter Struktur, insbesondere Erdalkali-Titanate, wie CaTiO₃, BaTiO₃ und SrTiO₃, aber auch BaZrO₃ sowie Hafnium-, Niob- oder Tantaloxide. Mit Calciumtitanat als Keramikkomponente werden wegen dessen niedriger Sintertemperatur besonders gute Ergebnisse erzielt. Im übrigen werden Erdalkalititanate wegen ihrer thermodynamischen Stabilität gegenüber der kathodischen Reduktion und gegenüber der anodischen Oxydation sowie wegen ihrer geringen Löslichkeit in Lauge bevorzugt. So sind Titanate in Lauge fast unlöslich, so daß keine Schwermetallabfallbeseitigungsprobleme auftreten.

Die auf den Cermet-Rohling aufgebrachte Schicht aus reduzierbarem Metalloxid enthält bevorzugt ein nicht reduzierbares Metalloxid, wobei der Anteil des nichtreduzierbaren Metalloxids so gewählt wird, daß es höchstens 30 Gew.-% der porösen Metallschicht ausmacht.

Der Vorteil des nichtreduzierbaren Metalloxids in der Elektrodenschicht besteht in der Schaffung einer großen inneren Oberfläche und Porosität durch Verhindern der Rekristallisation und des Zusammensintern des Metalls. Dies ist notwendig, um eine niedrige Überspannung in der Elektrolyse zu gewährleisten. Besonders bevorzugt wird Aluminiumoxid als nichtreduzierbares Metalloxid verwendet, denn es ist nicht nur billig, sondern geht bei der alkalischen Elektrolyse in Lösung, wodurch die Porosität der Elektrodenschicht vergrößert wird, ohne daß es im Elektrolyten stört. Die Gammaform des Alumiumoxids wird dabei wegen der größeren Löslichkeit bevorzugt. Der Verbund ist im übrigen vor allem für die alkalische Wasserelektrolyse bestimmt, da saure Elektrolyte stark korrodierend wirken.

Die auf den Cermet-Rohling aufgebrachte Schicht aus reduzierbarem Metalloxid enthält ferner vorteilhaft ein Metallpulver, wobei der Anteil des Metallpulvers so gewählt wird, daß es höchstens 60, vorzugsweise höchstens 40 % des Gewichts aus reduzierbarem Metalloxid und Metallpulver ausmacht.

Dadurch wird die Schrumpfung dieser Schicht während der reduktiven Sinterung verringert, welche sonst bis zu 20 % in der Fläche betragen kann. Die Teilchengröße des Metallpulvers ist gering zu halten, weil die Teilchen sonst sedimentieren. Beim Siebdrucken wird die Teilchengröße ohnehin durch die Maschenweite limitiert (z.B. 50 µm).

Die auf den Cermet-Rohling aufgebrachte Schicht aus reduzierbarem Metalloxid kann darüber hinaus ein oder mehrere Aktivatormetalle aufweisen. Im Gegensatz zum Stand der Technik, wo zur Aktivierung die Elektrode einer gesonderten Beschichtungsbehandlung unterzogen werden muß, kann also erfindungsgemäß das Aktivatormetall sehr elegant in die Druckpaste oder sonstige Masse eingemischt werden, die zur Herstellung der Elektrodenschicht verwendet wird. Falls das Aktivatormetall als Oxid oder Salz der Masse einverleibt wird, wird es während des reduktiven Sinterns des Verbundes in die metallische Form übergeführt. Als Aktivator-Metalle kommen alle Übergangsmetalle in Frage, deren synergetischer Effekt zur Elektrokatalyse der Wasserstoffentwicklung bzw. Oxidation in der alkalischen Brennstoffzelle ausgenützt werden kann, z.B. Oxide der Metalle der sechsten und siebten Nebengruppe des Periodensystems und der Edelmetalle der neunten, zehnten und elften Nebengruppe. Es können ebenso Beimischungen von Metalloxiden, Metallsalzen oder Metallen, die die elektrochemische Sauerstoffentwicklung bzw. Reduktion katalysieren, eingebaut werden, z.B. Einsengruppen-Metalle, wie Co, oder Edelmetalle wie Au oder Ag oder Platinmetalle oder Mo oder Ru oder definierte Mischdotierungen der genannten Elemente. Auch sind Lanthan und Strontium zu nennen. Als Salze kommen insbesondere Salze organischer Säuren, beispielsweise Acetate, in Betracht.

Die Menge des reduzierbaren Metalloxids für die poröse Metallschicht wird vorzugsweise so gewählt, daß es wenigstens 50 Gew.-% der porösen Metallschicht ausmacht.

Die Herstellung des Verbundes kann beispielsweise folgendermaßen durchgeführt werden:
Die Oxide für die keramische Komponente des Cermets und die reduzierbaren Metalloxide, aus denen die Metallkomponente des Cermets gebildet wird, werden zusammen vermahlen, worauf die Pulvermischung mit Additiven, wie organischen, flüchtigen Bindern und/oder Wasser zu einer Paste, Emulsion oder einer sonstigen plastischen Masse verarbeitet wird. Diese Masse wird dann z.B. mit einem Rakel zu einer Folie ausgezogen.

Die so hergestellten grünen Rohlinge der Cermetschicht können dann ein-oder beidseitig durch Filmziehen, Kalandrieren oder Siebdrucken mit einer Schicht der reduzierbaren Metalloxide versehen werden.

Anschließend wird der Verbund reduktiv gesintert. Das reduktive Sintern erfolgt vorzugsweise in einer H₂- oder CO-haltigen Inertgasatmosphäre. So kann die Reaktionssinteratmosphäre aus N₂ mit 1 bis 20 Vol.-% H₂ oder CO bestehen. Die Reaktionssintertemperatur der Cermetschicht liegt dicht unter der Schmelztemperatur der Metalle, die aus den reduzierbaren Metalloxiden entstehen, deshalb ist es vorteilhaft, die Reduktion nach dem keramischen Sintern der Cermetschicht bei niedrigeren Temperaturen, typischerweise 850 - 950° C durchzuführen.

Typische Schichtdicken der Cermetschicht des erfindungsgemäß hergestellten Verbundes sind 0,2 bis 5,0, vorzugsweise 0,3 bis 2,0 mm und der Elektroden-Metallschicht(en) 0,1 bis 5,0, vorzugsweise 0,2 bis 2,0 mm.

Um den An- und Abtransport der Reaktions- oder Produktgase an den porösen Metallelektroden zu verbessern, wird vorzugsweise eine Strukturierung der Elektrodenschicht von innen nach außen durchgeführt, und zwar nimmt die Poren- und/oder Korngröße vorteilhaft von innen nach außen zu.

Dazu wird die Schicht aus reduzierbarem Metalloxid aus mehreren Teilschichten aufgebaut, die jeweils durch Siebdruck aufgebracht werden. Um einen unterschiedlichen Aufbau der einzelnen Siebdruckschichten zu erhalten, werden dann ausgehend von der innersten Schicht, die direkt auf das Diaphragma gedruckt wird, in den einzelnen Siebdruckschichten zur äußersten Teilschicht hin z.B. zunehmend größere Metalloxidteilchen verwendet. Statt oder zusätzlich zur Verwendung zunehmend größerer Metalloxidteilchen können den Siebdruckschichten auch geeignete Füllstoffe einverleibt werden, die, wie beispielsweise Kohle, beim reduktiven Sintern verflüchtigt werden, wobei die Konzentration der sich verflüchtigenden Stoffe von der äußersten Teilschicht zur innersten Teilschicht abnimmt. Auf diese Weise können die wachsenden Gasblasen von der innersten Teilschicht nach außen verdrängt werden, von wo aus sie nach Überschreiten der kritischen Größe abreißen und aufsteigen oder bei Zwangskonvektion weggespült werden, bzw. der Antransport der Gase im Falle der Brennstoffzelle gelingt durch die hydrophobierten großen Poren der äußeren Schicht sehr gut.

Das Aufbringen der Schicht aus reduzierbarem Metalloxid in Teilschichten hat jedoch noch weitere Vorteile. So ist es möglich, die Aktivatormetalle bevorzugt der innersten Teilschicht einzuverleiben. Denn die innerste Teilschicht weist dank ihres geringen Abstandes zur Gegenelektrode die größte elektrolytische Aktivität auf.

Ferner kann die äußerste Teilschicht durch Siebdrucken Löcher mit einem Durchmesser von z.B. 0,5 bis 5 mm aufweisen. Dadurch wird auf der Elektrodenoberfläche außen eine Art Lochblech gebildet, d.h. eine für die Stromverteilung besonders günstige Außenschicht geschaffen.

Der erfindungsgemäß hergestellte Cermet-Metall-Verbund stellt ein hydrophiles, sehr flexibles, hoch korrosionsfestes, poröses Material dar, welches sich insbesondere für Elektrolysezellen mit sog. "zero-gap"-Diaphragmen-Elektroden-Verbundplatten für die Wasserelektrolyse, die Chloralkalielektrolyse sowie für die Brennstoffzellentechnik eignen. Das heißt, der erfindungsgemäß hergestellte Verbund eignet sich besonders für die Herstellung eines extrem kompakten bipolaren Zellenstapels in Filterpressenanordnung.

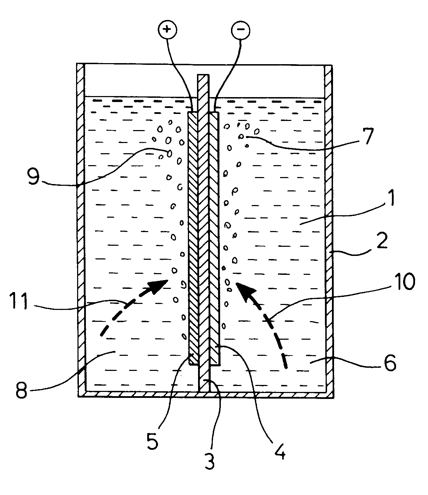

Nachstehend ist ein erfindungsgemäß hergestellter Verbund anhand der Zeichnung näher beschrieben, deren einzige Figur in schematischer Darstellung eine Vorrichtung zur Wasserelektrolyse zeigt.

Danach weist eine Vorrichtung zur Wasserelektrolyse alkalisches Wasser 1 in einem Behälter 2 auf, wobei ein Diaphragma 3, das beiderseits mit einer Elektrode 4 und 5 aus einer porösen Metallschicht versehen ist, den Kathodenraum 6, in dem das Wasserstoffgas 7 an der Elektrode 4 gebildet wird, vom Anodenraum 8 trennt, in dem das Sauerstoffgas 9 an der Elektrode 5 gebildet wird.

Durch die Pfeile 10 und 11 wird angedeutet, daß dem Diaphragma 3 mit den Elektroden 4 und 5 bei einer Brennstoffzelle von einer Seite Wasserstoffgas und von der anderen Seite Sauerstoffgas zugeführt wird.

Bei dem erfindungsgemäß hergestellten Elektrode/Diaphragma/Elektrode-Verbund besteht das Diaphragma 3 dabeiaus einer Cermetschicht, während die Elektroden 4 und 5 aus einer porösen Metallshicht aufgebaut sind.

### Beispiel 1

Eine Mischung aus 50 Gew.-% NiO-Pulver und 50 Gew.-% CaTiO₃ mit einer mittleren Korngröße von 5 µm wird vier Stunden bei 110° C calciniert. Das calcinierte Material wird gebrochen und gemahlen und in Fraktionen von 0,5 bis 5 µm, 10 bis 20 µm und 20 bis 50 µm ausgesiebt. Aus diesen Mischungen werden folgende drei Proben a) bis c) hergestellt:

| | | | | |
|---|---|---|---|---|
| Korngröße - | 5 µm | a) 10 Gew.-% | b) 60 Gew.-% | c) 50 Gew.-% |
| | 20 µm | | 40 Gew.-% | 30 Gew.-% |
| | 50 µm | | | 20 Gew.-% |

Aus der Probe a) wird durch Zugeben einer 2 %igen Zuckerlösung eine Paste hergestellt, aus der durch Filmziehen auf 200 µm Stärke eine grüne Schicht gebildet wird. Auf diese Schicht wird mit einer Paste mit "grunem" NiO eine 0,2 mm starke Schicht aufgetragen. Nach dem Trocknen kann der Zuckerbinder in dem grünen Material thermisch zersetzt und der Verbund reaktionsgesintert werden, und zwar bei 1100° C, einer Haltezeit von 45 Min. und in einer Atmosphäre aus 40 Gew.-% H₂ und 60 Gew.-% N₂. Es wird ein Verbund zwischen einer porösen Elektrode und einem Cermet-Diaphragma mit einer hohen Porosität von 45 % erhalten.

### Beispiel 2

Das Pulver b) wird mit 3 Gew.-% Gummi arabicum angepastet und mit einem Rakel zu einer Folie ausgezogen. Darauf wird von beiden Seiten eine Mischung aus "grünem" NiO und "schwarzem" NiO im Gewichtsverhältnis 1 : 1 aufgedruckt, und zwar mit einer Schichtdicke von jeweils 0,2 mm, wobei die Cermetschicht selbst 0,4 mm stark ist. Die weitere Verarbeitung erfolgt wie im Beispiel 1. Es wird ein Verbund aus einem Diaphragma mit beidseitig porösen Elektroden erhalten.

### Beispiel 3

Aus dem Pulver c) wird mit 3 Gew.-% dickem wässrigem 'Mowiol' (Hoechst) eine Paste hergestellt, aus der eine Cermetschicht von 220 µm Stärke gebildet wird. Darauf wird von einer Seite "grünes" NiO mit 3 Gew.-% MoO₃ mit einer Stärke von 250 µm aufgedruckt. Nach dem Drucken wird das Material bei 1170° C in einer Atmosphäre aus 50 Vol.-% N₂ und 50 Vol.-% H₂ reaktionsgesintert. Es wird ein Diaphragma mit einseitig verbundener Kathode erhalten, wobei die Kathode durch Mo für die H₂-Entwicklung aktiviert ist.

## Patentansprüche

1. Verfahren zur Herstellung eines Verbundes aus einer Cermet-Schicht und einer porösen Metall-Schicht auf beiden Seiten der Cermet-Schicht als Diaphragma mit Elektroden für die Wasserelektrolyse, Chloralkalielektrolyse oder Brennstoffzellen, bei dem ein grüner Rohling der Cermet-Schicht gefertigt wird, dessen keramische Komponente ein Erdalkali-, Alkali- oder Seltenerdmetalloxid, ein amphoteres Oxid der Metalle der dritten bis sechsten Nebengruppe des Periodensystems oder ein Gemisch dieser Oxide ist, auf den grünen Rohling der Cermet-Schicht beidseitig eine Schicht aus einem reduzierbaren Metalloxid aufgebracht wird und anschließend ein reduktives Sintern durchgeführt wird, um die Metalloxid-Schichten in poröse Metall-Schichten überzuführen, dadurch gekennzeichnet, daß der grüne Rohling der Cermet-Schicht ein reduzierbares Metalloxid enthält, aus dem beim reduktiven Sintern die Metallkomponente des Cermets gebildet wird, der Anteil des reduzierbaren Metalloxids in dem grünen Cermet-Rohling so gewählt wird, daß das entstehende Metall 5 bis 40% des Gewichts des Cermets ausmacht, und als reduzierbares Metalloxid für die Metall-Komponente des Cermets sowie für die porösen Metall-Schichten Nickel-, Kobalt- und/oder Eisenoxid verwendet wird.

2. Verfahren nach Anspruch 1, dadurch gekennzeichnet, daß das reduzierbare Metalloxid ein Gemisch aus Nickeloxid und Kobaltoxid mit einem Kobaltoxid-Anteil von 20-90, vorzugsweise 50-80 Gew.-% ist.

3. Verfahren nach Anspruch 1 oder 2, dadurch gekennzeichnet, daß die auf den Cermet-Rohling aufgebrachte Schicht aus reduzierbarem Metalloxid ein nicht reduzierbares Metalloxid enthält, wobei der Anteil des nicht reduzierbaren Metalloxids so gewählt wird, daß es höchstens 30 Gew.-% der porösen Metallschicht ausmacht.

4. Verfahren nach Anspruch 3, dadurch gekennzeichnet, daß als nicht reduzierbares Metalloxid ein im alkalischen Milieu lösliches Metalloxid verwendet wird.

5. Verfahren nach Anspruch 4, dadurch gekennzeichnet, daß das nicht reduzierbare Metalloxid Aluminiumoxid ist.

6. Verfahren nach einem der vorstehenden Ansprüche, dadurch gekennzeichnet, daß die auf den Cermet-Rohling aufgebrachte Schicht aus reduzierbarem Metalloxid ein Metallpulver enthält, wobei der Anteil des Metallpulvers so gewählt wird, daß es höchstens 60% des Gewichts aus reduzierbarem Metalloxid und Metallpulver ausmacht.

7. Verfahren nach Anspruch 6, dadurch gekennzeichnet, daß als Metallpulver ein Metall oder mehrere Metalle der ersten, zweiten oder achten Nebengruppe des Periodensystems verwendet werden.

8. Verfahren nach Anspruch 6 oder 7, dadurch gekennzeichnet, daß als Metallpulver Nickel, Kobalt und/oder Eisen verwendet wird.

9. Verfahren nach einem der vorstehenden Ansprüche, dadurch gekennzeichnet, daß die auf den Cermet-Rohling aufgebrachte Schicht aus reduzierbarem Metalloxid ein Aktivator-Metall in metallischer Form oder in Form eines Oxids oder Salzes enthält, welches beim reduktiven Sintern in die metallische Form übergeht.

10. Verfahren nach einem der vorstehenden Ansprüche, dadurch gekennzeichnet, daß die Schicht aus reduzierbarem Metalloxid durch Aufbringen mehrerer Teilschichten gebildet wird, welche gemeinsam reduktiv gesintert werden.

11. Verfahren nach einem der vorstehenden Ansprüche, dadurch gekennzeichnet, daß die Schicht bzw. die Teilschichten durch Siebdruck aufgebracht werden.

12. Verfahren nach Anspruch 10 oder 11, dadurch gekennzeichnet, daß die Größe der Metalloxid-Teilchen von der dem Cermet-Rohling benachbarten innersten Teilschicht zur äußersten Teilschicht hin zunimmt.

13. Verfahren nach einem der Ansprüche 10 bis 12, dadurch gekennzeichnet, daß den Metalloxid-Teilchen sich beim reduktiven Sintern verflüchtigende Stoffe zugesetzt werden und die Konzentration der sich beim reduktiven Sintern verflüchtigenden Stoffe von der äußersten Teilschicht zur innersten Teilschicht abnimmt.

14. Verfahren nach Anspruch 9 und 10, dadurch gekennzeichnet, daß das Aktivator-Metall in der oder den inneren Teilschichten enthalten ist.

15. Verfahren nach einem der Ansprüche 10 bis 14, dadurch gekennzeichnet, daß die äußere Teilschicht oder die äußeren Teilschichten durch Siebdruck strukturiert wird bzw. werden.

16. Verwendung des nach einem der vorstehenden Ansprüche hergestellten Elektroden-Diaphragma-Verbundes für die alkalische Wasserelektrolyse.

## Claims

1. Process for the manufacture of a composite of a cermet layer and a porous metal layer on both sides of the cermet layer as diaphragms with electrodes for the water electrolysis, alkaline chloride electrolysis or fuel cells, wherein a green blank of the cermet layer is manufactured, the ceramic component of which is an alkaline earth, alkaline or rare earth metal oxide, an amphoteric oxide of the metals of the third to sixth subgroup of the periodic system or a mixture of these oxides, a layer of a reducible metal oxide is applied to both sides of the green blank of the cermet layer and thereafter reducible sintering is carried out in order to transfer the metal oxide layers into porous metal layers, **characterised in that** the green blank of the cermet layer contains a reducible metal oxide from which the metal component of the cermet is formed during the reductive sintering, the proportion of the reducible metal oxide in the green cermet blank is chosen in such a manner that the produced metal constitutes between 5 and 40% of the weight of the cermet, and that nickel-, cobalt- and/or iron oxide is used as reducible metal oxide for both the metal component of the cermet and the porous metal layers.

2. Process according to claim 1, **characterised in that** the reducible metal oxide is a mixture of nickel oxide and cobalt oxide with a cobalt oxide portion of between 20 and 90 % by weight, preferably between 50 and 80 % by weight.

3. Process according to claim 1 or 2, **characterised in that** the layer of reducible metal oxide, which has been applied to the cermet blank, contains a non-reducible metal oxide, and that the portion of the non-reducible metal oxide is chosen so that it is maximum 30 % by weight of the porous metal layer.

4. Process according to claim 3, **characterised in that** a metal oxide which is soluble in an alkaline milieu is used as a non-reducible metal oxide.

5. Process according to claim 4, **characterised in that** the non-reducible metal oxide is aluminium oxide.

6. Process according to one of the above claims, **characterised in that** layer of reducible metal oxide which is applied to the cermet blank contains a metal powder, and that the portion of the metal powder is chosen so that it is maximum 60% of the weight of reducible metal oxide and metal powder.

7. Process according to claim 6, **characterised in that** a metal or several metals of the first, second or eighth subgroup of the periodic system are used as metal powder.

8. Process according to claim 6 or 7, **characterised in that** nickel, cobalt and/or iron are used as metal powder.

9. Process according to one of the above claims, **characterised in that** the layer of reducible metal oxide which is applied to the cermet blank contains an activator metal in metallic form or in the form of an oxide or salt which converts into the metallic form during the reductive sintering.

10. Process according to one of the above claims, **characterised in that** the layer of reducible metal oxide is formed by application of a plurality of partial layers which are together reductively sintered.

11. Process according to one of the above claims, **characterised in that** the layer, or the partial layers respectively, are applied by way of screen printing.

12. Process according to claim 10 or 11, **characterised in that** the size of the metal oxide particles increases from the innermost partial layer adjacent the cermet blank to the outermost partial layer.

13. Process according to one of claims 10 to 12, **characterised in that** substances which volatilize during reductive sintering are added to the metal oxide particles, and that the concentration of the substances which volatilize during reductive sintering reduces from the outermost partial layer to the innermost partial layer.

14. Process according to claim 9 and 10, **characterised in that** the activator metal is contained in the inner partial layer(s).

15. Process according to one of claims 10 to 14, **characterised in that** the outer partial layer(s) is/are structured by way of screen printing.

16. Use of the electrode-diaphragm composite produced according to one of the above claims for alkaline water electrolysis.

## Revendications

1. Procédé de préparation d'un composite constitué d'une couche de cermet et d'une couche de métal poreuse disposée sur les deux faces de la couche de cermet comme diaphragme avec électrodes pour l'électrolyse de l'eau, l'électrolyse de chlorures alcalins ou les piles à combustible, dans lequel on fabrique une pièce crue constituant la couche de cermet, dont les composants céramiques sont choisis parmi un oxyde de métal alcalino-terreux, alcalin ou de terre rare, un oxyde de métal amphotère de la troisième à la sixième colonne du système périodique ou un mélange de ces oxydes ; on applique sur les deux faces de la pièce crue constituant la couche de cermet une couche d'oxyde métallique réductible et on effectue ensuite un frittage réducteur pour transformer les couches d'oxyde de métal en couches de métal poreuses, caractérisé par le fait que la pièce crue constituant la couche de cermet contient un oxyde de métal réductible, à partir duquel se forment les composants métalliques du cermet au cours du frittage réducteur ; que la teneur en oxyde de métal réductible dans la pièce crue de cermet est choisie de telle sorte que le métal obtenu représente de 5 à 40% du poids du cermet, et qu'on utilise comme oxyde de métal réductible pour les composants métalliques du cermet et pour les couches de métal poreuses un oxyde de nickel, un oxyde de cobalt et/ou un oxyde de fer.

2. Procédé selon la revendication 1, caractérisé par le fait que l'oxyde de métal réductible est un mélange d'oxyde de nickel et d'oxyde de cobalt avec une teneur en oxyde de cobalt de 20 à 90% en poids, en particulier de 50 à 80% en poids.

3. Procédé selon la revendication 1 ou 2, caractérisé par le fait que la couche d'oxyde de métal réductible appliquée sur la pièce de cermet contient un oxyde de métal non-réductible dont la quantité est choisie de telle sorte qu'elle représente au plus 30% du poids de la couche métallique poreuse.

4. Procédé selon la revendication 3, caractérisé par le fait qu'on utilise comme oxyde métallique non-réductible un oxyde métallique soluble en milieu alcalin.

5. Procédé selon la revendication 4, caractérisé par le fait que l'oxyde métallique non-réductible est l'oxyde d'aluminium.

6. Procédé selon l'une quelconque des revendications précédentes, caractérisé par le fait que la couche d'oxyde métallique réductible appliquée sur la pièce de cermet contient une poudre de métal dont la quantité représente au plus 60% du poids de l'oxyde métallique réductible et de la poudre métallique.

7. Procédé selon la revendication 6, caractérisé par le fait qu'on utilise comme poudre métallique un métal ou plusieurs métaux choisis dans la première, deuxième ou huitième colonne du système périodique.

8. Procédé selon la revendication 6 ou 7, caractérisé par le fait qu'on utilise comme poudre métallique le nickel, le cobalt et/ou le fer.

9. Procédé selon l'une des revendications précédentes, caractérisé par le fait que la couche d'oxyde de métal réductible appliquée sur la pièce de cermet contient un métal-activateur sous forme métallique ou sous forme d'oxyde ou de sel lequel est transformé en forme métallique au cours du frittage réducteur.

10. Procédé selon l'une des revendications précédentes, caractérisé par le fait que la couche d'oxyde métallique réductible est formée par application de plusieurs couches élémentaires, lesquelles subissent simultanément un frittage réducteur.

11. Procédé selon l'une des revendications précédentes, caractérisé par le fait que la couche ou les couches élémentaires sont appliquées par sérigraphie.

12. Procédé selon la revendication 10 ou 11, caractérisé par le fait que la taille des particules d'oxyde métallique augmente en passant des couches élémentaires internes les plus proches de la pièce de cermet aux couches élémentaires les plus externes.

13. Procédé selon l'une des revendications 10 à 12, caractérisé par le fait que l'on ajoute aux particules d'oxyde métallique un composé qui se fluidifie au cours du frittage réducteur et que la concentration dudit composé diminue en passant des couches les plus externes aux couches les plus insternes.

14. Procédé selon la revendication 9 ou 10, caractérisé par le fait que le métal-activateur est contenu dans la ou les couches élémentaires internes.

15. Procédé selon l'une des revendications 10 à 14, caractérisé par le fait que la couche élémentaire externe ou les couches élémentaires externes sont structurées par sérigraphie.

16. Utilisation du composite-diaphragme-électrodes défini selon l'une des revendications précédentes pour l'électrolyse de l'eau alcaline
